# EUROPEAN PATENT APPLICATION

(11) **EP 3 025 843 A1**
(43) Date of publication of application: **01.06.2016**
(21) Application number: 15163474.8
(22) Date of filing: 14.04.2015
(51) Int. Cl.: B29C 45/42, B29C 45/76, B29C 47/92

(54) **APPARATUS FOR DETECTING DEFECT OF MOLDED PRODUCT IN MOLD-TAKEOUT ROBOT**

(30) Priority: 25.11.2014 KR 20140164976
(71) Applicant: Yudostar Co., Ltd., Incheon 405-817 (KR)
(72) Inventor: Song, Chang Dong, 406-743 Yeonsu-gu, Incheon (KR); Park, Jeong Ho, 422-761 Bucheon-si, Gyeonggi-do (KR)
(74) Representative: Dr. Weitzel & Partner

(57) **Abstract**

Provided is an apparatus for measuring a weight of a molded product in advance by using a weight sensor when the molded product is absorbed by an absorption apparatus provided on a robot arm or before the molded product is transferred to a conveyer, so as to reduce operating processes, to reduce equipment costs, and improve productivity. Also, provided is an apparatus for measuring a surface temperature of the molded product or a mold by using a temperature measuring apparatus in the absorption apparatus in order to detect a defect according to a temperature difference, and thus, a separate apparatus for measuring temperature is not necessary, and the operating processes are reduced and the productivity is improved greatly.

## Description

### CROSS-REFERENCE TO RELATED PATENT APPLICATIONS

This application claims the benefit of Korean Patent Application No. 10-2014-0164976, filed on November 25, 2014, in the Korean Patent Office, the disclosure of which is incorporated herein in its entirety by reference.

### BACKGROUND OF THE INVENTION

### 1. Field of the Invention

The present invention relates to an apparatus of detecting a defect for a mold-takeout robot, capable of determining whether a molded product is defective by measuring a weight and a temperature of a mold or the molded product by using a weight measuring and temperature measuring apparatus provided in the mold-takeout robot.

### 2. Description of the Related Art

Patent reference 1 discloses a method of determining a defect of a molded product when a weight of a molded product exceeds a predetermined weight range after measuring the weight of the molded product. However, according to the method of detecting the defect through a weight difference of the molded product, it is difficult to determine whether the molded product is defective when there is a fine difference in the measured weight. Also, detecting of the defect in the molded product only by measuring the weight is not considered as an exact way of determining the defect of the molded product. Also, Patent reference 1 discloses complicated weight measurement structure.

As another method of detecting a defect in a molded product, there is a method of determining whether the molded product is defective by measuring a temperature of a mold. When manufacturing a molded product, an injection resin material, for example, is injected into the mold to form the molded product, and then, a surface temperature of the mold or the molded product is measured. Then, when the measured temperature exceeds a predetermined set temperature range, it may be identified that the molded product inevitably has a defect due to partial and locational temperature difference. Conventionally, a temperature sensor is provided on an outside of the mold to measure the surface structure; however, in this case, a separate temperature measuring apparatus has to be provided and thus manufacturing costs and installation costs for the mold forming increase.

### 3. Prior Art Reference

(Patent Reference 1) Korean Registered Patent No. 10-1,478,488 (December 24,2014)

### SUMMARY OF THE INVENTION

The present invention provides a weight measuring apparatus having a simple structure formed on a robot transfer apparatus to measure a weight of a molded product to reduce operating processes and improve productivity, and a temperature measuring apparatus provided on an absorption apparatus formed on a robot arm to measure a surface temperature of the molded product or a mold that is absorbed by the absorption apparatus and to detect a defect in advance according to a temperature difference, so that separate equipment for measuring temperature is not necessary and operating processes may be reduced and productivity may be improved.

The present invention also provides an apparatus for detecting whether a molded product is defective by measuring the temperature at an accurate position by freely adjusting a location of measuring the temperature of the mold.

According to an aspect of the present invention, there is provided an apparatus for detecting a defect in an injection mold robot, for detecting whether a molded product is defective by measuring a weight and a temperature of the molded product after separating the molded product by using absorption tools, the apparatus including: a weight measuring apparatus comprising a frame connected to the robot, an installation plate formed on the frame, load cells formed on the installation plate, an absorption crossbar connected to the load cells, support bars provided on opposite ends of the absorption crossbar, and the absorption tools formed on the support bars; and a temperature sensor transfer apparatus provided on the support bar. The temperature sensor transfer apparatus may include: a crossbar connected to the support bars; a forward and backward shaft connected to the crossbar; a bracket connected to the forward and backward shaft; and a temperature sensor connected to the bracket. The absorption tools may absorb one of a mold or a molded product. The support bar may include a vertical recess formed in a vertical direction to adjust a vertical height of the crossbar. The temperature sensor may be one of an infrared thermometer or a contact type temperature sensor. The load cells may be formed on one of the installation plate, the frame, and a front end portion of the robot.

### BRIEF DESCRIPTION OF THE DRAWINGS

The above and other features and advantages of the present invention will become more apparent by describing in detail exemplary embodiments thereof with reference to the attached drawings in which:
FIG. 1 is a schematic diagram of an apparatus according to an embodiment of the present invention;
FIG. 2 is a diagram showing an example of measuring a weight of a molded product, according to an embodiment of the present invention;
FIGS. 3 and 4 are diagrams showing states before and after rotating an absorption tool;
FIG. 5 is a cross-sectional view showing principal parts of the apparatus of FIG. 1;
FIGS. 6A, 6B, and 6C are diagrams illustrating adjustment of a location of a temperature sensor; and
FIG. 7 is a diagram exemplarily showing an installation of a contact type temperature sensor.

### DETAILED DESCRIPTION OF THE INVENTION

Hereinafter, embodiments of the present invention will be described in detail with reference to accompanying drawings.

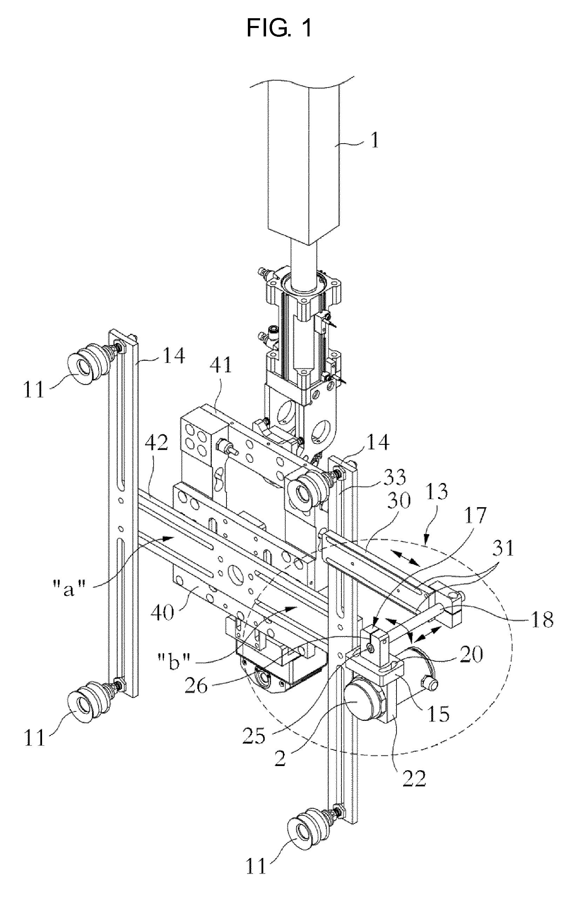

FIG. 1 is a schematic diagram of an apparatus according to an embodiment of the present invention.

As shown in FIG. 1, a frame 41 formed as a square frame is provided on a lower end of a robot arm 1 to which the apparatus according to the present invention is applied, and an installation plate 40 is formed on the frame 41.

An absorption crossbar 42 is provided on the installation plate 40 in a horizontal direction, and support bars 14 are provided on opposite ends of the absorption crossbar 42 in a vertical direction. In addition, absorption tools 11 are formed on upper and lower ends of the support bars 14 so as to separate a molded product in an injection mold from the injection mold by absorbing the molded product.

In addition, load cells (not shown) for measuring weight are formed between the installation plate 40 and the absorption crossbar 42. The load cells may be provided at two or more points of left and right sides of the installation plate 40 or the absorption crossbar 42. In FIG. 1, the load cells may be provided on points denoted as "a" and "b". That is, the load cells are provided on the installation plate 40 so that the absorption crossbar 42 is placed on the load cells and a weight of the absorption crossbar 42 and entire elements connected to the absorption crossbar 42 may be measured.

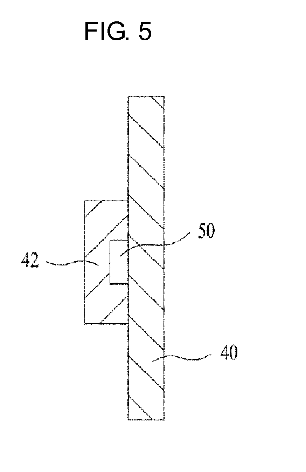

FIG. 5 is a cross-sectional view showing a load cell 50 provided on the installation plate 40.

As shown in FIG. 5, the load cell 50 is provided on the installation plate 40 and the absorption crossbar 42 is placed on the load cell 50, so that a total weight of the absorption crossbar 42, elements connected to the absorption crossbar 42, and a molded product absorbed by the absorption tools 11 may be measured.

If the load cell 50 is provided only on one point, a centroid of the molded product that is to be weighed is deviated to a side, and thus, it is difficult to measure the weight exactly. Therefore, the load cell 50 may be provided on two or more points at left and right sides of the installation plate 40. Since the load cell 50 measures a weight loaded on the absorption crossbar 42, the weight of the absorption crossbar 42 includes the weight of the molded product absorbed by the absorption tools 11. Therefore, if the weight of the molded product exceeds a predetermined standard weight deviation that is set in advance, the molded product is determined to be defective.

The weight of the molded product may vary when pinhole or blowhole generate in the molded product or there is a defect in injection or flow of a resin molded product, and thus, the variation in the weight is sensed to determine a defective molded product.

Locations where the load cells 50 are provided are exemplary, and the load cells 50 may be provided on other locations than the above examples. For example, the load cells 50 may be provided between the installation plate 40 and the frame 41 or between the frame 41 and a connecting portion of the robot arm 1.

In addition, a robot transfer apparatus 10 on which an infrared thermometer is mounted will be described below with reference to FIG. 1.

The temperature sensor is mounted on the robot transfer apparatus 10 in order to measure a temperature of a molded product formed in an injection mold or a mold, and if the measured temperature of the molded product or the mold exceeds a standard deviation, the molded product is determined to be defective and is separately transferred to a defect processing line by the robot transfer apparatus 10.

As shown in the drawing (FIG. 8), the absorption tools 11 are formed on, for example, four locations of the robot transfer apparatus 10 so as to absorb the injection mold or the molded product formed in the injection mold. In addition, in a state of absorbing the injection mold or the molded product, a location of a temperature sensor transfer apparatus 13, in which an infrared thermometer 2 is mounted, is adjusted to focus an infrared laser beam. A laser point may be focused by rotating the infrared thermometer 2 to left and right sides, or moving the infrared thermometer 2 back and forth, up and down, and in a horizontal direction.

The rotation of the infrared thermometer 2 in the left and right directions may be adjusted by an adjusting tool 15 formed on a bracket 17. An arc-shaped recess 20 formed as an arc is formed in the adjusting tool 15, and a coupling plate 22 for fixing the infrared thermometer 2 is provided under the arc-shaped recess 20. Therefore, the coupling plate 22 and the adjusting tool 15 are coupled and fixed with each other by using a screw through the arc-shaped recess 20. When it is wanted to turn the temperature sensor 2 to the left and right sides, the coupling plate 22 is twisted to left or right side within a range defined by the arc-shaped recess 20 and is fixed by using the screw via the arc-shaped recess 20.

The adjusting tool 15 is formed integrally with the bracket 17. In addition, the bracket 17 has a crack 26 that is partially cut from an upper portion to a lower portion of the bracket 17 and a coupling hole 25 formed under the crack 26 so as to be coupled to a forward and backward shaft 18 and fastened by a bolt. Thus, the bracket 17 is moved through the forward and backward shaft 18 to focus the laser point of the infrared thermometer 2.

Also, the forward and backward shaft 18 is provided on a crossbar 30, and the crossbar 30 may move to left and right sides and elevate up and down directions. The movements of the crossbar 30, on which the forward and backward shaft 18 is provided, in the left and right sides and in the up and down directions will be described below.

The movements of the crossbar 30 in the left and right sides and up and down directions may be performed by horizontal recesses 31 formed in the crossbar 30 and vertical recesses 33 formed in a support bar 14. The crossbar 30 is moved in the up and down directions through the vertical recess 33 of the support bar 14, and then, the crossbar 30 is moved to the left and right sides in a horizontal direction with respect to the support bar 14. After that, the crossbar 30 is fixed by using a coupling unit such as a fixing bolt penetrating through the vertical recess 33 and the crossing recess 31.

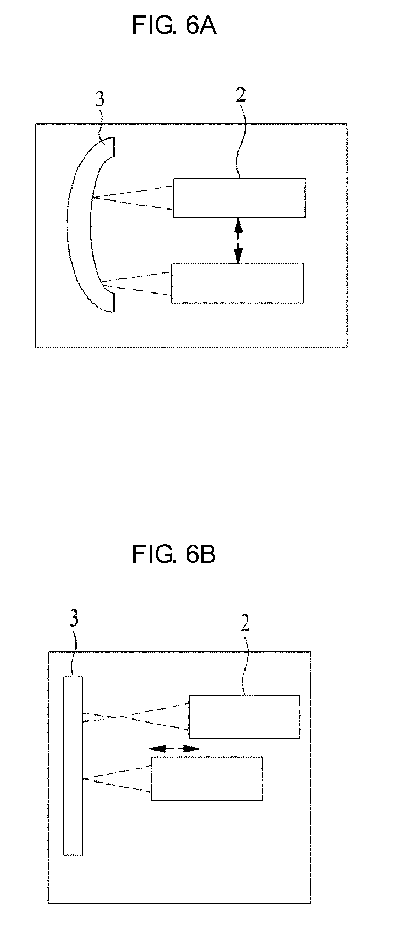

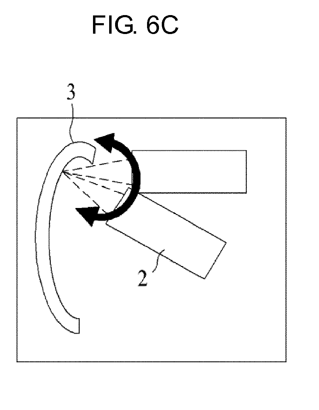

According to the above apparatus, as shown in FIGS. 6A, 6B, and 6C, the location of the infrared thermometer 2 may be freely changed to up and down directions, back and forth, and to be inclined according to a shape of the molded product, and accordingly, a temperature of the molded product may be measured accurately.

For example, when the infrared thermometer 2 is wanted to be slanted as shown in FIG. 6C, the bracket 17 is rotated at a predetermined angle with respect to the forward and backward shaft 18 and the coupling plate 22 on which the infrared thermometer 2 is provided is turned at a predetermined angle within the arc-shaped recess 22 in FIG. 1. Then, the infrared thermometer 2 may be located in an inclined position as shown in FIG. 6C.

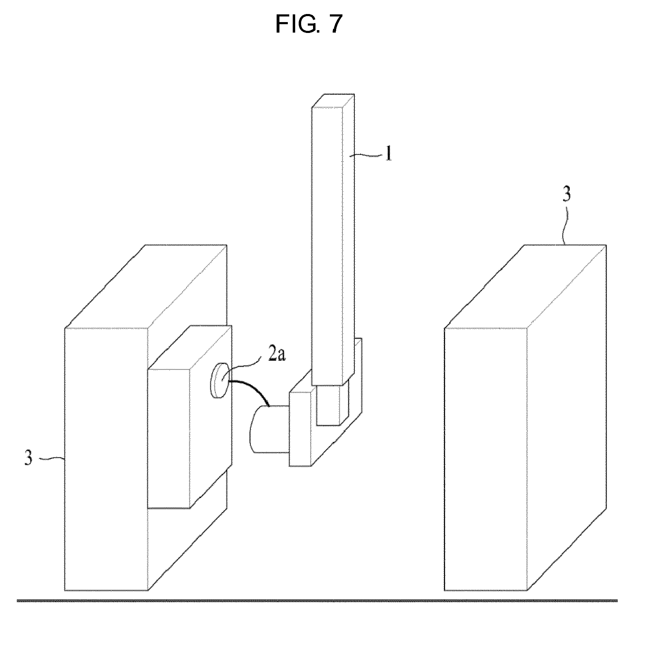

The temperature measurement performed by the temperature sensor may use the temperature sensor of a non-contact type using the infrared thermometer, but is not limited thereto. That is, the temperature may be measured by using other types of temperature sensors. For example, FIG. 7 shows an example in which the temperature sensor 2a is a contact-type temperature sensor, not the infrared thermometer. In FIG. 7, the temperature sensor 2a directly contacts the molded product 3 to measure the temperature.

The temperature measurement may be performed with respect to the injection mold for forming the molded product 3, not the molded product 3.

According to the above apparatus, the temperature sensor is provided on the robot transfer apparatus 10, and thus, there is no need to install an additional temperature measuring apparatus for measuring a temperature of the molded product. Therefore, manufacturing costs may be reduced and a time taken for measuring the temperature may be reduced, and accordingly, productivity of the apparatus may be improved.

Also, the location of the infrared thermometer 2 may be changed to all directions, for example, back and forth, left and right, up and down directions, and inclined direction. Thus, the temperature of any type of mold or molded product that is a measurement target may be freely and conveniently measured. In addition, when the measured temperature exceeds the standard deviation, it is determined that the molded product is defective and separately transferred as a defect by the robot transfer apparatus 10.

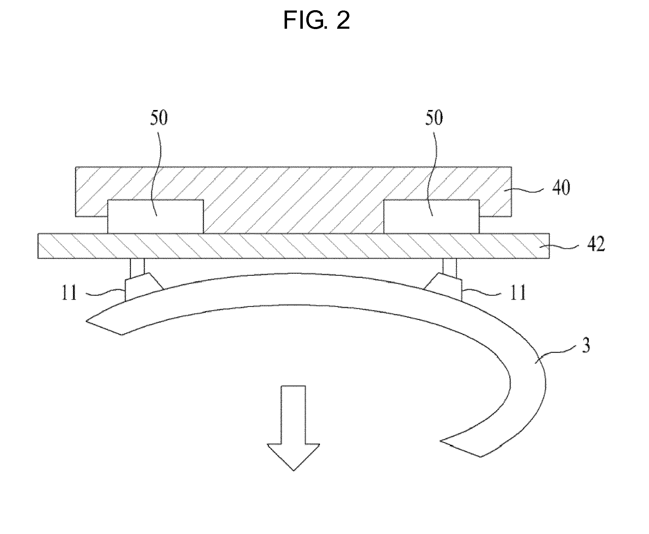

FIG. 2 is a diagram showing another example of a structure of mounting the load cell 50.

In the present embodiment, the load cells 50 are provided on left and right sides of the installation plate 40. The installation plate 40 is connected to the absorption crossbar 42, and the molded product 3 is absorbed by the absorption crossbar 42. Therefore, the weight of the molded product 3 is measured by using two load cells 50, and thus, even if the load of the molded product 3 is tilted to a side, the weight may be measured exactly.

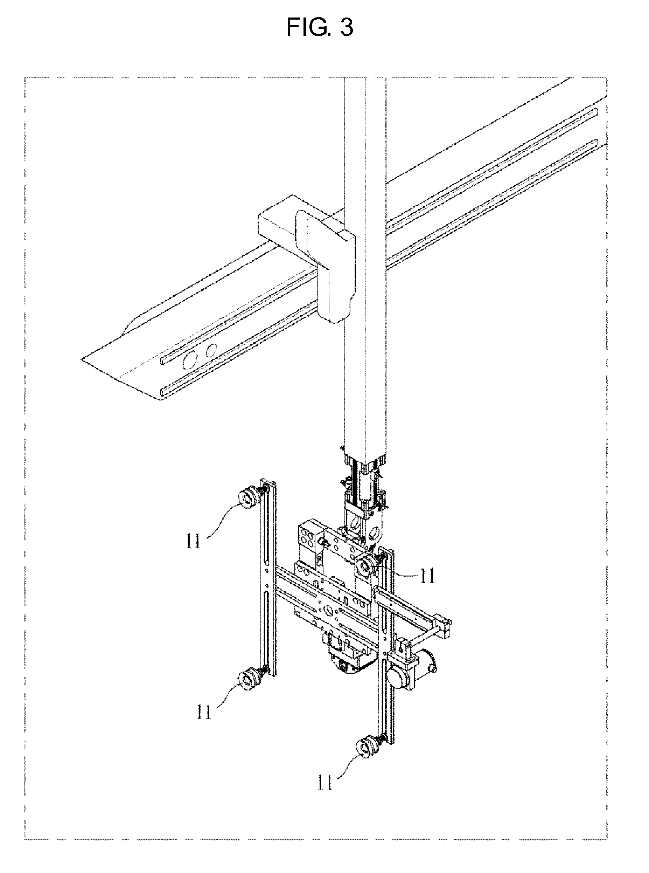

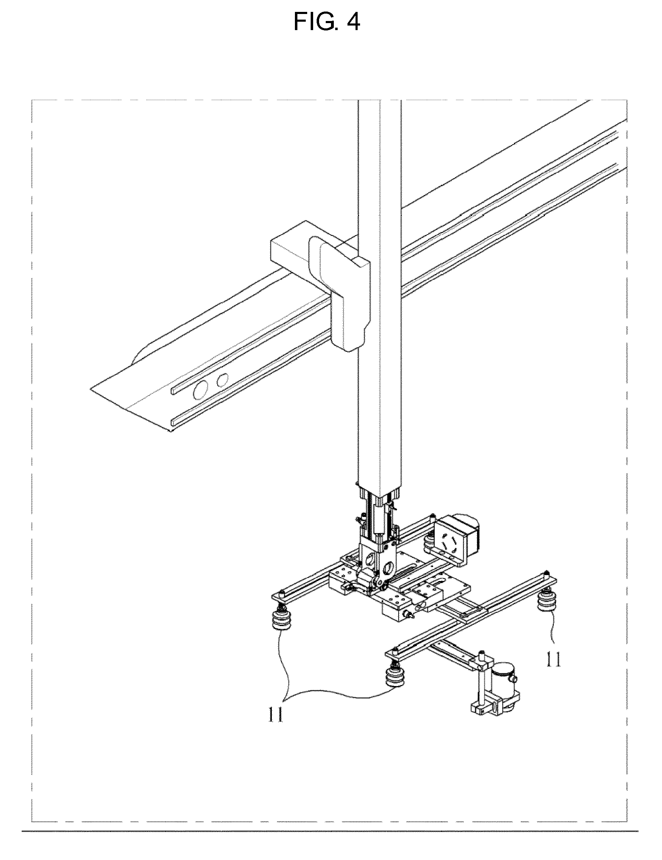

In FIG. 2, the molded product 3 is located downward and the weight is measured, and this will be described below with reference to FIGS. 3 and 4.

As shown in FIG. 3, a molded product (not shown) is absorbed by the absorption tools 11 in a state shown in FIG. 1, and then, is rotated as shown in FIG. 4 by using a rotating apparatus (including a hinge) that is mounted on a lower end of the robot arm 1. Then, the molded product 3 is located downward as shown in FIG. 2. In this state, the load cells 50 are configured to measure a load of the molded product 3. In this case, a fixing structure of the load cells 50 is different from that of FIG. 1. That is, the load cells 50 have to be provided on the installation plate 40 so that a load may be measured via a pulling force of the molded product 3, when the molded product 3 is placed on a lower portion.

According to the embodiment of FIG. 1, the weight may be measured directly in a state where the molded product is absorbed by the absorption tools 11. However, according to the embodiment of FIG. 2, the molded product is rotated 90-degree downward to be placed as shown in FIG. 2, and then, the weight of the molded product is measured.

As described above, any measurement type may be selected, but it is effective that the weight is measured directly on separating the molded product 3 from the injection mold by the absorption tools 11 absorbing the molded product 3, in consideration of processing rapidity. Then, as shown in FIG. 2, the molded product 3 may be transferred to a next process without being rotated, and thus, the number of processes may be reduced.

According to the embodiments of the present invention, the weight and the temperature of the molded product 3 may be measured during the absorption process performed by using the absorption tools 11 or a post-process, and thus, processes of detecting defective molded products by using the weight and temperature variation may be reduced and may be performed exactly, thereby improving productivity. Also, the weight measurement may be performed in a narrow space, and pieces of equipment such as an additional weight measuring apparatus and a temperature measuring apparatus are not necessary. Thus, equipment costs may be greatly reduced.

Also, according to the present invention, the weight sensor is provided in the absorption apparatus that is formed on the robot arm so that the robot transfer apparatus may measure the weight of the molded product in advance on absorbing the molded product or before transferring the molded product to a conveyor, and thus, the operating processes may be reduced, equipment costs may be reduced, and the productivity may be also greatly improved.

In addition, according to the present invention, the temperature measuring apparatus is provided in the robot arm so that a surface temperature of the molded product is measured in advance when the molded product or the mold is absorbed, and thus, a defect of the molded product may be detected in advance according to the temperature variation. Therefore, a separate temperature measuring equipment is not necessary, and thus, the operating processes may be reduced and the productivity may be also greatly improved.

Also, according to the present invention, it may be determined whether there is a defect simultaneously according to the weight and temperature variations of the molded product or the mold, and thus, the accuracy in detecting the defect may be ensured.

Also, since the robot detects the defect according to the weight and temperature variations, separate equipment for measuring the temperature and the weight is not necessary, and thus, an equipment space may be reduced.

While this invention has been particularly shown and described with reference to exemplary embodiments thereof, it will be understood by those skilled in the art that various changes in form and details may be made therein without departing from the spirit and scope of the invention as defined by the appended claims.

## Claims

1. An apparatus for detecting a defect in an injection mold robot, for detecting whether a molded product is defective by measuring a weight and a temperature of the molded product after separating the molded product by using absorption tools, the apparatus comprising:
a weight measuring apparatus comprising a frame connected to the robot, an installation plate formed on the frame, load cells formed on the installation plate, an absorption crossbar connected to the load cells, support bars provided on opposite ends of the absorption crossbar, and the absorption tools formed on the support bars; and
a temperature sensor transfer apparatus provided on the support bar.

2. The apparatus of claim 1, wherein the temperature sensor transfer apparatus comprises:
a crossbar connected to the support bars;
a forward and backward shaft connected to the crossbar;
a bracket connected to the forward and backward shaft; and
a temperature sensor connected to the bracket.

3. The apparatus of claim 1, wherein the absorption tools absorb one of a mold or a molded product.

4. The apparatus of claim 2, wherein the support bar comprises a vertical recess formed in a vertical direction to adjust a vertical height of the crossbar.

5. The apparatus of claim 2, wherein the temperature sensor is one of an infrared thermometer or a contact type temperature sensor.

6. The apparatus of claim 1, wherein the load cells are formed on one of the installation plate, the frame, and a front end portion of the robot.
